(19) Europäisches Patentamt
European Patent Office
Office européen des brevets

(11) **EP 4 141 665 A1**

(12) **EUROPÄISCHE PATENTANMELDUNG**

(43) Veröffentlichungstag:
**01.03.2023  Patentblatt 2023/09**

(21) Anmeldenummer: **21194119.0**

(22) Anmeldetag: **31.08.2021**

(51) Internationale Patentklassifikation (IPC):
**G06F 9/455** (2006.01)    **G06F 9/50** (2006.01)

(52) Gemeinsame Patentklassifikation (CPC):
**G06F 9/45558; G06F 9/505; G06F 9/5061;**
G06F 2009/4557; G06F 2009/45595

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Schall, Daniel**
**2020 Hollabrunn (AT)**

(74) Vertreter: **Maier, Daniel Oliver**
**Siemens AG**
**Postfach 22 16 34**
**80506 München (DE)**

(54)  **COMPUTER-IMPLEMENTIERTES VERFAHREN UND SYSTEM ZUR EFFIZIENTEN AUFGABEN-VERTEILUNG AN GERÄTE**

(57)    Computer-implementiertes Verfahren zur effizienten Aufgaben-Verteilung an Geräte (D1, D2, D3') innerhalb einer ersten Geräte-Gruppe (C1), welche ein erstes Gerät (D1) und zumindest ein zweites Gerät (D2, D3') aufweist, umfassend die Schritte:
a) Anbieten zumindest einer Aufgabe, welche dem ersten Gerät (D1) zugeordnet ist an das zumindest eine zweite Gerät (D2, D3'),
b) Signalisieren einer freien Geräte-Kapazität des zumindest einen zweiten Geräts (D2, D3') an das erste Gerät (D1),
c) Prüfen einer Übereinstimmung des Angebots aus Schritt a) mit einer freien Geräte-Kapazität aus Schritt b),
d) Falls eine Übereinstimmung aus Schritt c) vorliegt, übernehmen der Aufgabe vom ersten Gerät (D1) durch das zumindest eine zweite Gerät (D2, D3') und erledigen der Aufgabe durch das zumindest eine zweite Gerät (D2, D3').

FIG 4

**Beschreibung**

Die Erfindung betrifft ein computer-implementiertes Verfahren und ein System zur effizienten Aufgaben-Verteilung an Geräte innerhalb einer ersten Geräte-Gruppe, welche ein erstes Gerät und zumindest ein zweites Gerät aufweist.

Die Erfindung betrifft ferner eine computer-implementierte Datenstruktur, eine Verwendung der Datenstruktur, ein Computerprogramm, einen elektronisch lesbaren Datenträger und ein Datenträgersignal.

Edge-Geräte werden häufig im Produktions-Umfeld verwendet, um beispielweise Daten zu sammeln und Datenanalyse- und "Machine Learning"-Aufgaben durchzuführen.

Dabei kann die Hardwareauslastung der einzelnen Edge-Geräte jedoch stark variieren, was weder effizient noch wirtschaftlich ist.

Im Stand der Technik sind Lösungen zur computergestützten Verwaltung und Abarbeitung von Aufgaben bekannt, welche jedoch sehr komplex sind und auf Cloud-Umgebungen mit hochqualifizierten IT-Mitarbeitern abzielen, wie beispielsweise Kubernetes.

In aktuellen Edge-Computing- und IoT-Systemen gibt es keine automatische Möglichkeit, die Workloads zu verwalten und neu auszubalancieren, damit Edge-Geräte über verschiedene Gerätecluster hinweg gleichmäßiger genutzt werden.

Der Benutzer muss entweder die Edge-HW manuell aktualisieren und ein leistungsstärkeres Gerät installieren oder bestimmte Anwendungen auf ein anderes Edge-Gerät verschieben.

Ersteres wäre suboptimal, da - wie im weiter unten angeführten Beispiel dargestellt - ein anderes Edge-Gerät weitgehend ungenutzt bleiben könnte.

Letztere Aktion ist in kleinen Umgebungen mit wenigen Geräten und Apps möglich, wird jedoch ziemlich entmutigend, wenn viele Geräte in der Fabrik bereitgestellt werden.

Es ist die Aufgabe der Erfindung eine einfache Lösung zum effizienten Verteilen von Aufgaben in Gruppen-Umgebungen bereitzustellen.

Die erfindungsgemäße Aufgabe wird durch ein Verfahren eingangs genannter Art gelöst, indem folgende Schritte ausgeführt werden:

a) Anbieten zumindest einer Aufgabe (A), welche dem ersten Gerät (D1) zugeordnet ist an das zumindest eine zweite Gerät (D2, D3'),

b) Signalisieren einer freien Geräte-Kapazität (O) des zumindest einen zweiten Geräts (D2, D3') an das erste Gerät (D1),

c) Prüfen einer Übereinstimmung (M) des Angebots (A) aus Schritt a) mit einer freien Geräte-Kapazität (O) aus Schritt b),

d) Falls eine Übereinstimmung aus Schritt c) vorliegt, übernehmen der Aufgabe (A) vom ersten Gerät (D1) durch das zumindest eine zweite Gerät (D2, D3') und erledigen der Aufgabe (A) durch das zumindest eine zweite Gerät (D2, D3').

Dadurch können Aufgaben von Edge-Geräten in Gruppen-Umgebungen gemeinsam genutzt werden, was für eine verbesserte Flexibilität und Effizienz unter ganzen Geräte-Gruppen sorgt.

Dies erhöht den Gesamtdurchsatz von Aufgaben, reduziert die Belastung von Geräten mit hoher Auslastung und erhöht die Nutzung von Geräten, die mehr Leerlaufzeiten aufweisen.

Ferner wird durch eine zentralisierte Planung und Workload-Verteilung eine einfache und effiziente Lösung erzielt.

In einer Weiterbildung der Erfindung ist es vorgesehen, dass vor dem Schritt a) eine Gewichtung der zumindest einen Aufgabe mithilfe einer Gewichtsfunktion vorgenommen wird.

Dadurch wird erreicht, dass beispielsweise ein bestimmtes Gerät bei der Erledigung einer Angebotenen Aufgabe übergangen wird, oder eine Präferenz auf ein bestimmtes Gerät zur Aufgaben-Erledigung bestimmt werden kann. Dies hat den Vorteil, dass beispielsweise Geräte gezielt dafür vorgesehen sein können, um Auslastungsspitzen abzudecken, oder beispielsweise eine zeitliche Planung von Geräten abzudecken, falls eine Prognose ergibt, dass zu einer bestimmten Zeit eine Aufgabe erwartet wird. Dadurch kann ein sehr hoher Auslastungsgrad über alle Geräte des Geräte-Pools erreicht werden.

In einer Weiterbildung der Erfindung ist es vorgesehen, dass das zumindest eine zweite Gerät zumindest zwei Geräte umfasst, und nach Schritt c) geprüft wird, welches Gerät einen höheren Übereinstimmungsgrad aufweist, und dieses Gerät zur Ausführung für den Schritt d) ausgewählt wird.

Dadurch wird erreicht, dass eine Priorisierung bei Vorliegen mehrerer Angebote zur Aufgaben-Erledigung erfolgen kann. Die zuvor genannten Vorteile gelten auch hier.

In einer Weiterbildung der Erfindung ist es vorgesehen, dass das zumindest eine zweite Gerät eine virtuelle Repräsentation eines Fremd-Geräts ist, welches logisch einer zweiten Geräte-Gruppe zugeordnet ist und nicht der ersten Geräte-Gruppe angehört, welcher das erste Gerät logisch zugeordnet ist.

Dadurch wird erreicht, dass auf einen erweiterten Geräte-Pool zur Erledigung von Aufgaben zurückgegriffen werden kann, nämlich auch auf solche Geräte, die beispielsweise logisch nicht im selben lokalen Netzwerk liegen, wie in einem anderen virtuellen lokalen Netzwerk. Dies erhöht die Flexibilität weiter.

In einer Weiterbildung der Erfindung ist es vorgesehen, dass die Prüfung im Schritt c) durch das erste Gerät (D1) erfolgt, welches die Aufgabe im Schritt a) angeboten hat.

Dadurch wird erreicht, dass jenes Gerät, welches eine Aufgabe zur Abarbeitung oder Erledigung anbietet, selbst darüber entscheiden kann, welches Gerät den Zuschlag zur Erledigung erhält, was zu einer Verbesserung der Autonomie des Geräts führt und ein Verzicht auf eine zentrale Koordination erlaubt.

In einer Weiterbildung der Erfindung ist es vorgesehen, dass die Aufgabe im Schritt a) zumindest eine Teilaufgabe umfasst, welche vorzugsweise zumindest einem Aufgabentyp zugeordnet ist, und Aufgabentyp Eigenschaften zugeordnet ist, welche die Art der Daten und Rechenkapazität bei der Ausführung der Teilaufgabe beschreiben.

Dadurch wird erreicht, dass je nach Ausgabentyp eine gesonderte Erledigung durchgeführt werden kann, was zu einer höheren Flexibilität führt.

In einer Weiterbildung der Erfindung ist es vorgesehen, dass das zumindest eine zweite Gerät zumindest zwei Geräte umfasst, und das Anbieten im Schritt a), das Signalisieren im Schritt b) und das Prüfen im Schritt c) mithilfe jeweils einer computer-implementierten Datenstruktur in Form Matrix erfolgt.

Dadurch wird erreicht, dass die inneren Abläufe innerhalb des Verfahrens besonders effizient erfolgen. Durch Verwendung der Datenstruktur ist es aus eine besonders einfache Weise möglich, die Angebote, die Signalisierungen und die Prüfung durchzuführen und die entsprechenden Operationen durchzuführen, nämlich indem ein nur sehr kleiner Speicherbedarf zur Realisierung besteht und die Operationen durch Matrizen-Operationen besonders einfach erledigt werden können.

Die erfindungsgemäße Aufgabe wird auch durch ein System zur effizienten Aufgaben-Verteilung an Geräte innerhalb einer ersten Geräte-Gruppe gelöst, welche ein erstes Gerät und zumindest ein zweites Gerät aufweist, wobei das System dazu eingerichtet ist das erfindungsgemäße Verfahren auszuführen.

Die erfindungsgemäße Aufgabe wird auch durch eine computer-implementierte Datenstruktur in Form zumindest einer Matrix gelöst, welche sein kann:

- eine Angebots-Matrix, welche abseits deren Diagonal-Elementen die angebotene Aufgabe enthalten ist, und/oder

- eine Kapazität-Matrix, welche in deren Diagonal-Elementen die Auslastung eines ersten Geräts und zumindest eines zweiten Geräts enthält, und/oder

- eine Prüf-Matrix, welche als Matrix-Elemente jeweils den Grad der Übereinstimmung nach Durchführung einer Prüf-Operation aufweist.

Die erfindungsgemäße Aufgabe wird auch durch eine Verwendung der erfindungsgemäßen Datenstruktur bei der effizienten Aufgaben-Verteilung an Geräte gelöst.

Die erfindungsgemäße Aufgabe wird auch durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird auch durch einen elektronisch lesbaren Datenträger mit darauf gespeicherten lesbaren Steuerinformationen, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird auch durch eine Datenträgersignal gelöst, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:

Fig. 1    ein Beispiel für Geräte-Gruppen an einer Edge,

Fig. 2    ein Beispiel für Aufgaben-Gruppen an einer Edge,

Fig. 3    eine schematische Darstellung von Geräte-Gruppen,

Fig. 4    eine schematische Darstellung des erfindungsgemäßen Verfahrens zur Arbeitsteilung,

Fig. 5    ein Beispiel für Aufgaben-Gruppen und Aufgabentypen für Edge-Geräte,

Fig. 6    ein Beispiel für eine Kommunikations-Architektur zur Durchführung des erfindungsgemäßen Verfahrens.

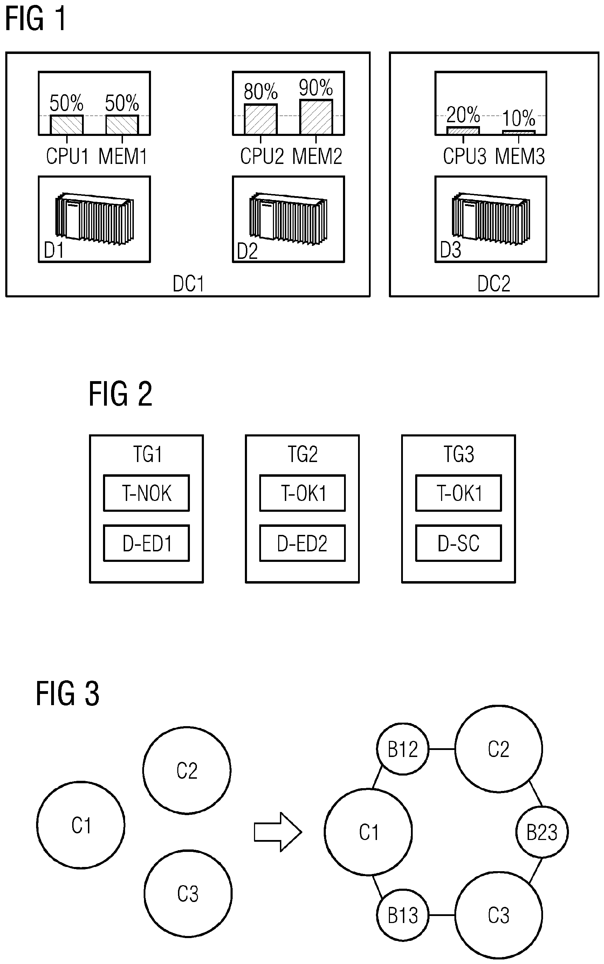

**Fig. 1** zeigt ein Beispiel für Geräte-Gruppen an einer Edge.

Edge-Geräte werden häufig in einem Fertigungskontext verwendet, um Daten zu sammeln und Datenanalyse- und "Machine Learning" (ML)-Aufgaben durchzuführen.

Diese Edge-Geräte bieten eine große Flexibilität, um beispielsweise bei Bedarf zusätzliche Apps zu installieren.

Natürlich kann die Hardwareauslastung verschiedener Geräte je nach den aktuellen Apps, die auf dem System ausgeführt werden, und den ML/AI-Aufgaben variieren.

Die Figur zeigt den CPU- und Speicherverbrauch CPU1-CPU3, MEM1-MEM3 von drei Edge-Geräten D1-D3.

Es gibt zwei Gruppen von Gerätegruppen DC1, DC2 (engl. "device cluster"), die logisch getrennt sind.

Beispielsweise könnte Gruppe DC1 alle Geräte in einer Halle 1 und Gruppe DC2 alle Geräte in einer Halle 2 darstellen.

Diese logische Trennung wird in der Praxis oft aus Sicherheits- und Skalierbarkeitsüberlegungen vorgenommen, beispielsweise als unterschiedliche Subnetze oder VLANs implementiert.

Das erste Gerät D1 weist eine mäßige HW-Auslastung, das Gerät D2 eine erhebliche HW-Auslastung und das Gerät auf dem Gerät D3 eine geringe HW-Auslastung auf.

Cloud-Umgebungen verwenden häufig einen Kubernetes-Scheduler für die automatisierte Bereitstellung, Skalierung und Verwaltung von Containern.

Kubernetes erfordert jedoch eine komplexe Einrichtung des Netzwerks sowie der Serverinfrastruktur als zentrale Koordinationseinrichtung.

Das Hinzufügen oder Entfernen von Edge-Geräten kann bei Systemen aus dem Stand der Technik dazu führen, dass die Verfügbarkeit bestimmter Geräte ungünstig beeinflusst wird.

Beim Parallel Computing ist "work stealing" eine Planungsstrategie für Multithread-Computerprogramme.

Es löst das Problem der Ausführung einer dynamischen Multithread-Berechnung, die neue Ausführungs-Threads "spawnen" kann, auf einem statisch Multithread-Computer mit einer festen Anzahl von Prozessoren (oder Kernen).

In einem "work stealing scheduler" hat jeder Prozessor in einem Computersystem eine Warteschlange von Arbeitselementen (Rechenaufgaben, Threads), die ausgeführt werden müssen.

Jede Arbeitsaufgabe besteht aus einer Reihe von Anweisungen, die sequentiell ausgeführt werden, aber im Laufe ihrer Ausführung kann eine Arbeitsaufgabe auch neue Arbeitsaufgaben hervorbringen, die möglicherweise parallel zu ihrer anderen Arbeit ausgeführt werden können.

Diese neuen Elemente werden anfänglich in die Warteschlange des Prozessors gestellt, der die Arbeitsaufgabe ausführt. Wenn einem Prozessor die Arbeit ausgeht, schaut er sich die Warteschlangen der anderen Prozessoren an und "stiehlt" deren Arbeitselemente.

Tatsächlich verteilt "work stealing" die Planungsarbeit über freie Prozessoren, und wenn alle Prozessoren Arbeit zu erledigen haben, tritt kein Planungsaufwand auf.

**Fig. 2** zeigt beispielhaft drei Aufgaben-Gruppen TG1-TG3, welche im erfindungsgemäßen Verfahren abgearbeitet werden sollen.

Innerhalb der Aufgaben-Gruppen TG1-TG3 sind Aufgabentypen G1-G3 definiert, welche beispielsweise Datenverwendungen, Orte von Datenspeicherungen oder eine Leistungsfähigkeit eines Prozessors in Zusammenhang mit einer konkreten Aufgabe näher spezifizieren.

Aufgaben vom Typ T-NOK in der Aufgaben-Gruppe TG1 können nicht von einem Edge-Gerät an ein anderes delegiert werden.

Aufgaben vom Typ T-OK1, T-OK2 in der Aufgaben-Gruppe TG2 und TG3 können jedoch an ein anderes Edge-Gerät delegiert werden.

Daten D-ED1 in der Aufgaben-Gruppe TG1 basieren auf Daten, die auf Edge-Geräten gesammelt wurden.

Daten D-ED2 in der Aufgaben-Gruppe TG2 befinden sich auf Edge-Geräten und müssen zusammen mit anderen Aufgaben geteilt werden.

Daten D-SC in der Aufgaben-Gruppe TG3 befinden sich auf dem Server oder in der Cloud und können vom Edge-Gerät heruntergeladen werden.

**Fig. 3** zeigt links Geräte-Gruppen C1-C3 (engl. "cluster"), welche nicht miteinander verbunden sind.

Diese Geräte-Gruppen C1-C3 sind logisch getrennt, und eine Arbeitslastverteilung ist nicht möglich, da keine logische Verknüpfung zwischen diesen Gruppen besteht.

In der Figur rechts sind die Geräte-Gruppen C1-C3 mittels Brücken-Geräten B12, B13, B23 (engl. "bridge") verbunden, welche dafür zuständig sind, unverbundene Gruppen miteinander zu verbinden, um eine Arbeitsteilung zwischen den Gruppen in einer gruppierten Umgebung zu ermöglichen.

Geräte innerhalb einer Gruppe werden auch als Peer-geräte bezeichnet.

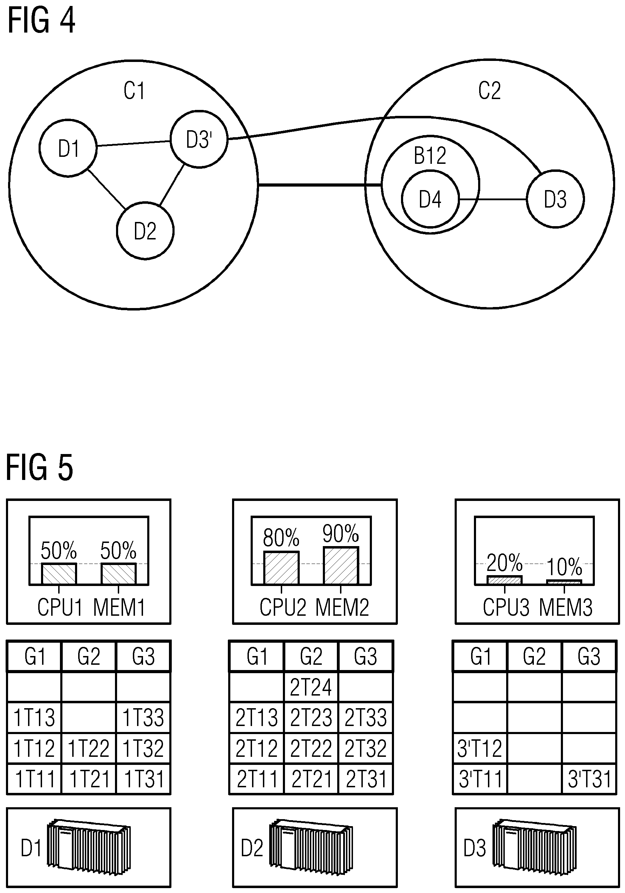

**Fig. 4** zeigt eine symbolische Darstellung des erfindungsgemäßen Verfahrens.

Ein Gerät D4, welches zur Geräte-Gruppe C2 gehört, fungiert als Brücken-Gerät zwischen Geräte-Gruppe C1 und C2 und verbindet diese beiden Geräte-Gruppen.

Brücken-Geräte unterstützen somit die Erkennung von Geräten für die gruppenübergreifende Arbeitslastverteilung.

Das Gerät D4 erzeugt ein "Schatten-Gerät" D3' des Gerät D3 in Geräte-Gruppe C1.

Ein "Schatten-Gerät" ist eine virtuelle Repräsentation eines physischen Geräts aus einer anderen Gruppe.

Somit ist das "Schatten-Gerät" D3' für die Geräte D1 und D2 in Gruppe 1 erkennbar.

Das "Schatten-Gerät" D3' kann nun dazu verwendet werden, um Geräte in Gruppe 1 darauf aufmerksam zu machen, dass weitere Ressourcen in der Gruppe für eine Aufteilung der Aufgaben zur Verfügung stehen.

Dadurch wird erreicht, dass Ressourcen anderen Gruppen zur Nutzung eingesetzt werden können.

**Fig. 5** zeigt ein Beispiel für Aufgabentypen G1-G3 für die Edge-Geräte D1-D3.

Die Aufgaben mit den Bezeichnungen *T* sind folgendermaßen gekennzeichnet:

- Geräte-Präfix 1, 2, 3
- Gruppen-Identifikation Aufgabe T1 für Aufgabentyp G1, Aufgabe T2 für Aufgabentyp G2, und Aufgabe T3 für Aufgabentyp G3
- Aufgaben-Identifikation 1, 2, 3

Es ergibt sich somit eine Aufgaben 1T13 als Aufgabe für Gerät D1 für Gruppe G2 und Aufgaben-Index 3.

Gerät D2 umfasst vier Aufgaben 2T21, 2T22, 2T23 und 2T24 in Gruppe G2, und weist eine hohe CPU-Auslastung CPU2 und eine hohe Speicherauslastung MEM2 auf.

Aus diesem Beispiel ergibt es sich, dass es vorteilhaft wäre, Aufgaben vom Gerät D2 zum virtuellen Gerät D3' zu verschieben. Mit anderen Worten soll erreicht werden, dass das Gerät D3' Aufgabe vom Gerät D2 stiehlt.

Im Weiteren wird nun beschrieben, wie dieses "stehlen" von Aufgaben erreicht wird.

Ein Gerät kann die Aufgabe erfolgreich stehlen und abschließen.

Somit wurde eine erfolgreiche Arbeitslastverteilung durchgeführt.

Ein Gerät kann erfolgreich stehlen, aber die Aufgabe trotzdem nicht ausführen, was unerwünscht ist.

Daher wurde die Arbeitslastverteilung nicht erfolgreich durchgeführt.

Eine Präferenz-Matrix kann dabei helfen, Verteilungs-Präferenzen beziehungsweise Prioritäten anzugeben, um zu verhindern, dass bestimmte Geräte Aufgaben stehlen.

Tabelle 1 zeigt eine Aufgaben-Matrix T (engl. "task"), aus welcher hervorgeht, dass eine Verteilung unter allen Geräten D1, D2, D3' mithilfe der Aufgabentypen G1, G2, G3' möglich ist.

Tabelle 1: Aufgaben-Matrix T

|     | D1  | D2  | D3' |
| --- | --- | --- | --- |
| D1  |     | 1   | 1   |
| D2  | 1   |     | 1   |
| D3' | 1   | 1   |     |

Eine Gewichts-Matrix W (engl. "weight") nach Tabelle 2 zeigt, wie mithilfe von Gewichten Präferenzen zur Verteilung von Aufgaben vergeben werden können. Mit anderen Worten repräsentiert die Gewichts-Matrix W die zuvor genannte Präferenz-Matrix.

Tabelle 2: Gewichts-Matrix W

|     | D1  | D2  | D3' |
| --- | --- | --- | --- |
| D1  |     | 1   | 1   |
| D2  | 0   |     | 1   |
| D3' | 1   | 1   |     |

Eine Aufgaben-Verteilung vom Gerät D1 zum Gerät D2 ist unerwünscht und wird durch den Gewichtsfaktor 0 verhindert. Somit kann das Gerät D2 keine Aufgabe des Geräts D1 "stehlen".

Ein Gerät nun kündigt an, dass es eine Aufgabengruppe, also eine Aufgabe des Typen G2 und G3 teilen möchte.

Die Unterscheidung zwischen der Aufgabengruppe G2 und G3 ist wichtig, da Aufgaben in G2 dazu führten, dass eine Peer-2-Peer-Kommunikation zwischen den Geräten durchgeführt werden muss.

Somit sind Kommunikationsqualität und Zuverlässigkeit zwischen den Geräten wichtig.

Wenn die Kommunikation zwischen zwei Geräten nicht immer zuverlässig ist, kann ein Präferenzgewicht kleiner als 1 zugewiesen werden.

Diese Funktion wird durch eine Ankündigungs-Matrix A (engl. "announcement") gemäß Tabelle 3 erreicht.

Tabelle 3: Ankündigungs-Matrix A

|     | D1  | D2  | D3' |
| --- | --- | --- | --- |
| D1  | 0   | 0   | 0   |
| D2  | 0,3 | 0   | 0,3 |
| D3' | 0   | 0   | 0   |

In diesem Beispiel zeigt das Gerät D2, dass es bereit ist mit ihren Peer-Geräten D1 und D3' jeweils 30% ihrer Last zu teilen.

Beispielsweise weist das Gerät D2 eine CPU-Auslastung CPU2 von 80% auf, und durch Verschiebung einzelner Aufgaben in der Höhe von 30% CPU-Last würde sich die CPU-Auslastung CPU2 auf 50% reduzieren.

In diesem Beispiel gibt es keine besondere Präferenz für Gerät 1 oder 3' (das Präferenzgewicht für jedes Gerät ist 1 aus Sicht von Gerät 2).

Tabelle 4 zeigt eine Angebots-Matrix O (engl. "offer"), mit welcher ein Kapazitäts-Angebot bestimmt werden kann.

Tabelle 4: Angebots-Matrix O

|     | D1  | D2  | D3' |
| --- | --- | --- | --- |
| D1  | 0,5 | 0,5 | 0,5 |
| D2  | 0   | 0,8 | 1   |
| D3' | 0,8 | 0,8 | 0,2 |

Die Angebots-Matrix O bildet die Geräte-Auslastung in den Diagonal-Elementen der Matrix ab.

Verfügbare Kapazitäten sind daraus ableitbar, welche den anderen Peer-Geräten angeboten werden.

Mithilfe einer Übereinstimmungs-Matrix M (engl. "match") kann nun ermittelt werden, wie Ankündigungen und Angebote übereinstimmen, das heißt wie eine Aufgabe "gestohlen" werden kann.

Dies liefert die Übereinstimmungs-Matrix M durch den Zusammenhang:

$$M = A \times O^T$$

Eine transponierte Angebots-Matrix $O^T$ durch Transponierung der Angebots-Matrix O bestimmt werden kann.

Tabelle 5 zeigt ein Beispiel für die transponierte Angebots-Matrix $O^T$.

Tabelle 5: Transponierte Angebots-Matrix $O^T$

|     | D1  | D2  | D3' |
| --- | --- | --- | --- |
| D1  | 0,5 | 0   | 0,8 |
| D2  | 0,5 | 0,8 | 0,8 |
| D3' | 0,5 | 0   | 0,2 |

Das Ergebnis ist die Übereinstimmungs-Matrix M nach Tabelle 6.

Tabelle 6: Übereinstimmungs-Matrix
M

|     | D1   | D2  | D3'  |
| --- | ---- | --- | ---- |
| D1  | 0    | 0   | 0    |
| D2  | 0,15 | 0   | 0,24 |
| D3' | 0    | 0   | 0    |

Die Geräte D1 und D3' sind zwei Anwärter für einen Aufgaben"Diebstahl".

Da Gerät D3' einen höheren Übereinstimmungs-Grad durch eine geringere Auslastung als Gerät D1 aufweist wird Gerät 3' als Gewinner festgelegt und Gerät D3' kann die Aufgabe vom Gerät D2 "stehlen", also ausführen beziehungsweise abarbeiten, um die Auslastung des Geräts D2 zu reduzieren.

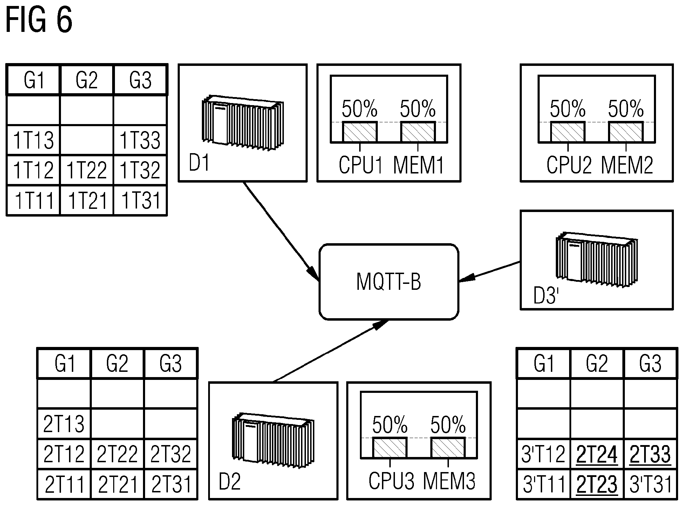

**Fig. 6** stellt ein Beispiel für eine Kommunikations-Systemarchitektur auf Basis eines zentralen MQTT-Brokers MQTT-B zum Verteilen von Aufgaben dar.

Der MQTT-Broker verbindet die drei Geräte D1, D2, D3'.

Das Gerät D3' übernimmt Aufgaben vom Gerät D2, wodurch die Auslastung vom Gerät D2 sinkt und wobei dies ohne zentrale Koordination erfolgt.

Jedes Gerät erkennt selbst dessen Auslastung und deren abzuarbeitenden Aufgaben und erstellt selbstständig "Diebstahls"-Angebote.

Dabei ist kein zentrales "scheduling"-Service erforderlich, welches Aufgaben überwacht und verteilt beziehungsweise wiederverteilt.

In der Figur ist eine Wiederverteilung der Aufgaben 2T24, 2T23 und 2T33 von Gerät D2 zum Gerät D3' als Ergebnis erkennbar.

**Bezugszeichenliste:**

| | |
| --- | --- |
| *T* | Aufgabe, Auftrag, Teilaufgabe, auszuführender Programmcode |
| B12, B13, B23 | Bridge-Gerät |
| C1-C3 | Geräte-Gruppe |
| CPU1-CPU3 | Prozessorauslastung |
| D1-D4 | Gerät |
| D3' | Schatten-Gerät |
| DC1-DC3 | Geräte-Gruppe |
| D-ED1 | Daten liegen auf Edge-Gerät |
| D-ED2 | Daten liegen auf Edge-Gerät |
| D-SC | Daten liegen auf Server oder Cloud |
| G1-G3, G3' | Aufgabentyp-Liste |
| MEM1-MEM3 | Speicherauslastung |
| MQTT-B | MQTT Broker |
| O | Angebots-Matrix |
| TG1-TG3 | Aufgaben-Gruppe |
| T-NOK | Daten-Transfer nicht möglich |
| T-OK | Daten-Transfer möglich |

**Patentansprüche**

1.  Computer-implementiertes Verfahren zur effizienten Aufgaben-Verteilung an Geräte (D1, D2, D3') innerhalb einer ersten Geräte-Gruppe (C1), welche ein erstes Gerät (D1) und zumindest ein zweites Gerät (D2, D3') aufweist, umfassend die Schritte:

     a) Anbieten zumindest einer Aufgabe (A), welche dem ersten Gerät (D1) zugeordnet ist an das zumindest eine zweite Gerät (D2, D3'),

b) Signalisieren einer freien Geräte-Kapazität (O) des zumindest einen zweiten Geräts (D2, D3') an das erste Gerät (D1),

c) Prüfen einer Übereinstimmung (M) des Angebots (A) aus Schritt a) mit einer freien Geräte-Kapazität (O) aus Schritt b),

d) Falls eine Übereinstimmung aus Schritt c) vorliegt, übernehmen der Aufgabe (A) vom ersten Gerät (D1) durch das zumindest eine zweite Gerät (D2, D3') und erledigen der Aufgabe (A) durch das zumindest eine zweite Gerät (D2, D3').

2. Verfahren nach dem vorhergehenden Anspruch, wobei vor dem Schritt a) eine Gewichtung der zumindest einen Aufgabe (A) mithilfe einer Gewichtsfunktion (W) vorgenommen wird.

3. Verfahren nach einem der vorhergehenden Ansprüche, wobei das zumindest eine zweite Gerät (D2, D3') zumindest zwei Geräte umfasst, und nach Schritt c) geprüft wird, welches Gerät (D3') einen höheren Übereinstimmungsgrad aufweist, und dieses Gerät (D3') zur Ausführung für den Schritt d) ausgewählt wird.

4. Verfahren nach einem der vorhergehenden Ansprüche, wobei das zumindest eine zweite Gerät (D3') eine virtuelle Repräsentation eines Fremd-Geräts (D3) ist, welches logisch einer zweiten Geräte-Gruppe (C2) zugeordnet ist und nicht der ersten Geräte-Gruppe (C1) angehört, welcher das erste Gerät (D1) logisch zugeordnet ist.

5. Verfahren nach einem der vorhergehenden Ansprüche, wobei die Prüfung im Schritt c) durch das erste Gerät (D1) erfolgt, welches die Aufgabe im Schritt a) angeboten hat.

6. Verfahren nach einem der vorhergehenden Ansprüche, wobei die Aufgabe (A) im Schritt a) zumindest eine Teilaufgabe (2T21, 2T22, 2T23) umfasst, welche vorzugsweise zumindest einem Aufgabentyp (G1-G3) zugeordnet ist, und Aufgabentyp Eigenschaften zugeordnet ist, welche die Art der Daten (MEM1-MEM3) und Rechenkapazität (CPU1-CPU3) bei der Ausführung der Teilaufgabe (2T21, 2T22, 2T23) beschreiben.

7. Verfahren nach einem der vorhergehenden Ansprüche, wobei das zumindest eine zweite Gerät (D2, D3') zumindest zwei Geräte umfasst, und das Anbieten im Schritt a), das Signalisieren im Schritt b) und das Prüfen im Schritt c) mithilfe jeweils einer computer-implementierten Datenstruktur in Form Matrix (A, O, M) erfolgt.

8. Computer-implementierte Datenstruktur in Form zumindest einer Matrix (A, O, M), welche sein kann:

   • eine Angebots-Matrix (A), welche abseits deren Diagonal-Elementen die angebotene Aufgabe enthalten ist, und/oder
   • eine Kapazität-Matrix (O), welche in deren Diagonal-Elementen die Auslastung eines ersten Geräts (D1) und zumindest eines zweiten Geräts (D2, D3') enthält, und/oder
   • eine Prüf-Matrix, welche als Matrix-Elemente jeweils den Grad der Übereinstimmung nach Durchführung einer Prüf-Operation aufweist.

9. Verwendung der Datenstruktur nach dem vorhergehenden Anspruch bei der effizienten Aufgaben-Verteilung an Geräte (D1, D2, D3').

10. Computerprogramm, umfassend Befehle, welche bei deren Ausführung durch einen Computer diesen veranlassen, das Verfahren nach einem der Ansprüche 1 bis 7 auszuführen.

11. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der Ansprüche 1 bis 7 durchführen.

12. Datenträgersignal, welches das Computerprogramm nach Anspruch 10 überträgt.

13. System zur effizienten Aufgaben-Verteilung an Geräte (D1, D2, D3') innerhalb einer ersten Geräte-Gruppe (C1), welche ein erstes Gerät (D1) und zumindest ein zweites Gerät (D2, D3') aufweist, wobei das System dazu eingerichtet ist das Verfahren nach einem der Ansprüche 1 bis 7 auszuführen.

FIG 1

FIG 2

FIG 3

# FIG 4

# FIG 5

| G1 | G2 | G3 |
|------|------|------|
|      |      |      |
| 1T13 |      | 1T33 |
| 1T12 | 1T22 | 1T32 |
| 1T11 | 1T21 | 1T31 |

| G1 | G2 | G3 |
|------|------|------|
|      | 2T24 |      |
| 2T13 | 2T23 | 2T33 |
| 2T12 | 2T22 | 2T32 |
| 2T11 | 2T21 | 2T31 |

| G1 | G2 | G3 |
|-------|------|-------|
|       |      |       |
|       |      |       |
| 3'T12 |      |       |
| 3'T11 |      | 3'T31 |

FIG 6

| G1 | G2 | G3 |
|------|------|------|
|      |      |      |
| 1T13 |      | 1T33 |
| 1T12 | 1T22 | 1T32 |
| 1T11 | 1T21 | 1T31 |

D1

50% 50%
CPU1 MEM1

50% 50%
CPU2 MEM2

MQTT-B

D3'

| G1 | G2 | G3 |
|------|------|------|
|      |      |      |
| 2T13 |      |      |
| 2T12 | 2T22 | 2T32 |
| 2T11 | 2T21 | 2T31 |

D2

50% 50%
CPU3 MEM3

| G1 | G2 | G3 |
|-------|-------|-------|
|       |       |       |
|       |       |       |
| 3'T12 | 2T24 | 2T33 |
| 3'T11 | 2T23 | 3'T31 |

**Europäisches Patentamt**
**European Patent Office**
**Office européen des brevets**

# EUROPÄISCHER RECHERCHENBERICHT

**Nummer der Anmeldung**

**EP 21 19 4119**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 10 162 683 B2 (IBM [US]) 25. Dezember 2018 (2018-12-25) * Spalte 1, Zeile 5 – Zeile 31 * * Spalte 6, Zeile 21 – Spalte 8, Zeile 8 * * Spalte 9, Zeile 62 – Spalte 10, Zeile 3 * ----- | 1-13 | INV. G06F9/455 G06F9/50 |
| | | | RECHERCHIERTE SACHGEBIETE (IPC) |
| | | | G06F |

Der vorliegende Recherchenbericht wurde für alle Patentansprüche erstellt

| Recherchenort | Abschlußdatum der Recherche | Prüfer |
|---|---|---|
| **München** | **4. Februar 2022** | **Milasinovic, Goran** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 19 4119

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2022

| Im Recherchenbericht angeführtes Patentdokument | Datum der Veröffentlichung | Mitglied(er) der Patentfamilie | Datum der Veröffentlichung |
|---|---|---|---|
| US 10162683 B2 | 25-12-2018 | US 2015355943 A1<br>US 2019034245 A1 | 10-12-2015<br>31-01-2019 |

EPO FORM P0461

Für nähere Einzelheiten zu diesem Anhang : siehe Amtsblatt des Europäischen Patentamts, Nr.12/82